# FASCICULE DE BREVET EUROPEEN

(11) **EP 0 600 765 B1**
(45) Date de publication et mention de la délivrance du brevet: **08.11.1995**
(21) Numéro de dépôt: 93402838.2
(22) Date de dépôt: 22.11.1993
(51) Int. Cl.: B23K 15/00

(54) **Procédé d'assemblage de deux pièces par soudage par faisceau d'électrons**
Verfahren zum Verbinden zweier Werkstücke durch Elektronenstrahlschweissen
Method for assembling two workpieces by electronbeamwelding

(30) Priorité: 30.11.1992 FR 9214411
(43) Date de publication de la demande: 08.06.1994
(73) Titulaire: FRAMATOME, 92400 Courbevoie (FR)
(72) Inventeur: Gaudin, Jean-Paul, F-69681 Chassieu (FR)
(74) Mandataire: Bouget, Lucien

(56) Documents cités:
- DE-A- 2 239 304
- FR-A- 2 128 114
- PATENT ABSTRACTS OF JAPAN vol. 004, no. 125 (M-030) 3 Septembre 1980 & JP-A-55 084 284 (NIPPON KOKAN KK) 25 Juin 1980
- PATENT ABSTRACTS OF JAPAN vol. 006, no. 216 (M-168) 29 Octobre 1982 & JP-A-57 121 890 (TOKYO SHIBAURA DENKI KK) 29 Juillet 1982
- WELDING INTERNATIONAL, vol.5, no.9, 1991, ABINGTON GB pages 707 - 719, XP000219288 A.DUCROT 'A solution to problems presented by residual magnetism in electron beam welding'
- PATENT ABSTRACTS OF JAPAN vol. 004, no. 171 (M-044) 26 Novembre 1980 & JP-A-55 120 493 (HITACHI LTD.) 16 Septembre 1980

## Description

L'invention concerne un procédé d'assemblage de deux pièces par soudage par faisceau d'électrons selon le préambule de la revendication 1 (voir FR-A-2128114) et notamment de deux pièces de forte épaisseur, de forme plane ou de forme tubulaire.

Dans le cadre de la fabrication d'ensembles de grandes dimensions, par les techniques de la chaudronnerie lourde, il est très souvent nécessaire d'effectuer des soudures bout à bout de deux pièces telles que des plaques épaisses ou des viroles à forte épaisseur de paroi, ou tout autre configuration telle qu'un piquage rapporté sur une enveloppe tubulaire.

En particulier, dans le cadre de la fabrication des cuves pour réacteur nucléaire, on est amené à effectuer l'assemblage des cuves par soudage bout à bout de viroles ayant une épaisseur supérieure à 50 mm et de préférence supérieure ou égale à 200 mm et pouvant atteindre par exemple une valeur de l'ordre de 350 mm.

On a proposé d'utiliser le procédé de soudage par faisceau d'électrons pour réaliser l'assemblage de pièces de forte épaisseur telles que des viroles de cuve de réacteur nucléaire.

Ce procédé présente l'avantage de permettre une réduction sensible des délais de fabrication, du fait de la réduction du temps nécessaire pour le soudage. En effet, le soudage par faisceau d'électrons peut être réalisé en une seule passe sur toute l'épaisseur des pièces, ce qui permet d'obtenir un gain de temps considérable par rapport aux procédés dans lesquels on réalise le dépôt d'un métal d'apport dans un chanfrein ménagé entre les deux pièces, par exemple en utilisant une machine de soudage à l'arc, ces procédés nécessitant de nombreuses passes successives au cours de chacune desquelles on effectue le dépôt d'un cordon de soudure.

Pour effectuer le soudage de deux pièces par faisceau d'électrons, ces deux pièces sont rapportées l'une contre l'autre, suivant deux faces de jonction dont la largeur correspond sensiblement à l'épaisseur des pièces et dont la longueur s'étend suivant la direction de la ligne de raccordement des deux pièces. Le soudage est réalisé sans métal d'apport en déplaçant le faisceau d'électrons dirigé transversalement par rapport aux pièces, suivant la ligne de raccordement longitudinale entre les deux faces de jonction. On réalise ainsi la fusion du métal des deux pièces suivant une zone régulière et de faible largeur. La soudure présente une très bonne qualité métallurgique dans le cas de pièces réalisées en des nuances de matériaux alliés soigneusement définies.

Cependant, les soudures d'assemblage de pièces épaisses réalisées par faisceau d'électrons peuvent présenter certains défauts de compacité. Ces défauts peuvent se présenter en particulier sous la forme de cavités, de fissures de direction axiale ou de défauts de la zone d'extrémité ou fond de la soudure. Ces défauts peuvent être évités ou limités en adaptant et en réglant de manière très fine les conditions de soudage.

En outre, dans le cas du soudage par faisceau d'électrons, les pièces à souder sont soumises à un champ magnétique induit par le faisceau d'électrons. Les pièces qui sont généralement en matériau ferromagnétique peuvent présenter une induction rémanente qui entraîne une déviation du faisceau d'électrons lorsqu'il traverse l'entrefer entre les faces de jonction des pièces. Du fait que le faisceau n'est plus dirigé parfaitement suivant la surface de raccordement des pièces, le soudage peut être réalisé de façon seulement partielle. Il en résulte bien sûr un défaut rédhibitoire de la soudure réalisée qui est particulièrement gênant dans le cas de pièces épaisses. Dans le cas de pièces d'une épaisseur aussi importante que 200 ou 350 mm, la soudure peut s'avérer tout-à-fait déficiente du fait de la déviation du faisceau d'électrons.

Dans un article de la revue "Welding International", vol. 5 n° 9, 1991, pages 707-719, on a proposé de réaliser une désaimantation totale des pièces à joindre par faisceau d'électrons pour éviter l'effet d'un champ magnétique sur le faisceau d'électrons. Ce procédé requiert l'utilisation de dispositifs complexes qui doivent être adaptés à la forme et à la taille des pièces dont on réalise la désaimantation.

Dans le JP-A-5584824, on propose d'intercaler entre les faces de jonction des pièces à joindre un matériau magnétique par exemple sous forme de poudre, à l'état compacté. Le matériau intercalé entre les pièces produit une surépaisseur et, de ce fait, les pièces ne sont pas rapportées l'une contre l'autre dans une disposition précise. D'autre part, le matériau magnétique qui est fondu en même temps que les pièces risque de diminuer la qualité métallurgique du joint soudé.

Dans le FR-A-2.128.114, on décrit un procédé de soudage par faisceau d'électrons dans lequel, afin d'ajuster les caractéristiques chimiques, métallurgiques et mécaniques du joint soudé, on intercale entre les pièces un matériau d'apport en quantité déterminée. Le matériau d'apport peut être introduit, préalablement à la mise en contact et au soudage des pièces, dans une cavité usinée dans l'une des pièces. Les pièces à joindre et le matériau d'apport sont fondus simultanément par un faisceau d'électrons dirigé suivant une direction transversale de la cavité recevant le matériau d'apport et déplacé suivant une direction longitudinale des faces de jonction des pièces. Ce procédé ne permet pas de limiter la déviation du faisceau d'électrons due à des effets magnétiques.

Le but de l'invention est donc de proposer un procédé d'assemblage de deux pièces par soudage par faisceau d'électrons, les deux pièces étant rapportées l'une contre l'autre, suivant deux faces de jonction, dans lequel on réalise, préalablement à la mise en contact des faces de jonction des pièces l'une avec l'autre, par usinage, sur l'une au moins des faces de jonction une cavité sur une partie substantielle de la largeur de la face de jonction dans sa direction transversale et sur toute sa longueur, on introduit un matériau métallique dans la cavité et on réalise la fusion du métal des pièces au voisinage des faces de jonction mises en contact et du matériau métallique simultanément à la fusion du métal des pièces par déplacement dans une direction longitudinale des faces de jonction d'un faisceau d'électrons dirigé suivant la direction transversale de la cavité, ce procédé permettant d'obtenir une soudure de très bonne qualité qui soit en particulier parfaitement continue sur toute l'épaisseur des pièces.

Dans ce but, le matériau métallique est un matériau amagnétique.

Afin de bien faire comprendre l'invention, on va maintenant décrire, à titre d'exemple non limitatif, plusieurs modes de réalisation d'un procédé suivant l'invention et son utilisation pour le soudage bout à bout de pièces planes ou tubulaires ou pour la fixation d'un piquage sur un corps cylindrique.

La figure 1 est une vue en perspective des parties d'extrémité de deux pièces planes préalablement à leur raccordement par soudage par faisceau d'électrons.

La figure 2 est une vue en perspective de parties d'extrémité de deux pièces tubulaires préalablement à leur raccordement par soudage par faisceau d'électrons.

La figure 3 est une vue en coupe par un plan perpendiculaire aux faces de jonction, de deux pièces à assembler dans lesquelles on a réalisé des cavités par usinage.

La figure 4 est une vue er coupe par un plan perpendiculaire à leurs faces de jonction, de deux pièces, lors de la mise en oeuvre d'un procédé d'assemblage suivant l'invention et suivant un premier mode de réalisation.

La figure 5 est une vue en coupe par un plan perpendiculaire à leurs faces de jonction, de deux pièces, lors de la mise en oeuvre du procédé suivant l'invention et suivant un second mode de réalisation.

La figure 6 est une vue en perspective d'un piquage fixé par soudage par faisceau d'électrons sur une pièce tubulaire.

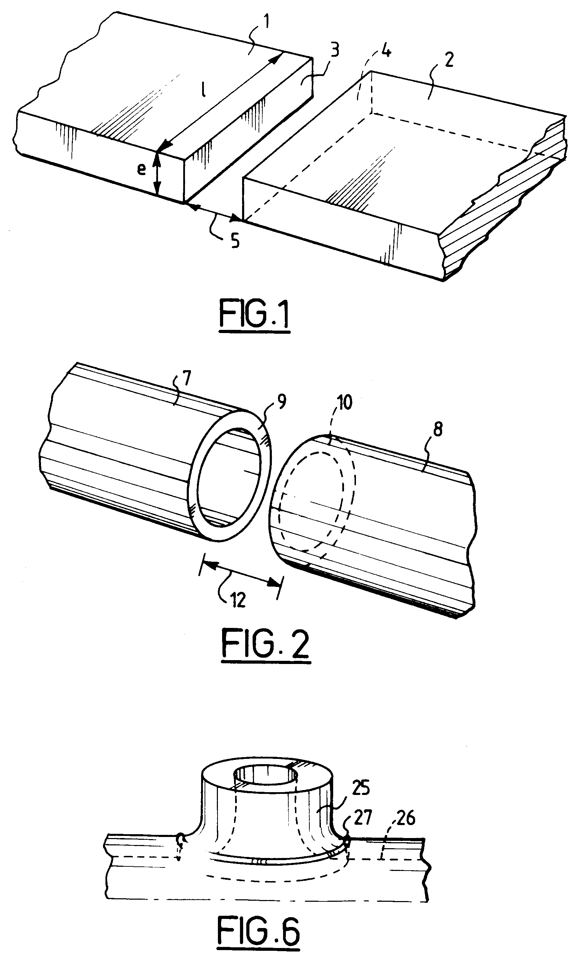

Sur la figure 1, on voit des parties d'extrémité de deux pièces planes 1, 2 de forte épaisseur qui peuvent être constituées par exemple par des tôles épaisses en acier faiblement allié dont on veut réaliser la jonction bout à bout suivant deux surfaces de jonction planes 3 et 4 qui constituent des sections transversales des tôles épaisses 1 et 2 respectivement.

Les surfaces de jonction 3 et 4 ont pour largeur l'épaisseur e des tôles 1 et 2 et pour longueur l la largeur des tôles.

Pour effectuer l'assemblage bout à bout des tôles 1 et 2 par soudage par faisceau d'électrons, les faces 3 et 4 sont rapportées l'une sur l'autre, comme schématisé par la flèche 5.

Le soudage est réalisé en déplaçant un faisceau d'électrons suivant l'un des bords longitudinaux des surfaces de jonction 3 et 4 mises en coïncidence, le faisceau d'électrons étant dirigé perpendiculairement aux grandes faces des tôles 1 et 2, suivant la surface de jonction des tôles 1 et 2.

Le déplacement du faisceau d'électrons le long de la ligne de raccordement constituée par les bords longitudinaux des faces de jonction 3 et 4 mises en coïncidence peut être réalisé soit par déplacement du canon à électrons par rapport aux tôles 1 et 2 soit par déplacement des tôles 1 et 2 placées en coïncidence par rapport au canon à électrons.

Sur la figure 2, on a représenté deux parties d'extrémité de deux viroles cylindriques 7 et 8 dont on veut assurer l'assemblage suivant les sections de jonction 9 et 10 de forme annulaire qui sont placées au contact l'une de l'autre préalablement au soudage par faisceau d'électrons, comme indiqué par la flèche 12.

Le soudage par faisceau d'électrons peut être réalisé par déplacement suivant la direction circonférentielle des viroles 7 et 8, d'un faisceau d'électrons de direction radiale par rapport aux viroles 7 et 8, dirigé suivant la surface de jonction des viroles.

Dans le cas de deux pièces tubulaires telles que des viroles, les surfaces de jonction telles que 9 et 10 de forme annulaire présentent une direction transversale suivant l'épaisseur de la paroi des viroles et une direction longitudinale correspondant à la direction circonférentielle des viroles.

Le déplacement circonférentiel du faisceau d'électrons par rapport aux viroles peut être obtenu en utilisant un canon à électrons dans une position fixe et en faisant tourner les viroles 7 et 8 autour de leur axe, de manière à balayer la ligne de raccordement circonférentielle entre les zones de jonction 9 et 10.

Du fait qu'un champ magnétique induit peut entraîner la présence d'une induction rémanente dans les pièces telles que les pièces 1 et 2 ou 7 et 8, le faisceau d'électrons dirigé suivant la direction transversale de l'entrefer entre les pièces à assembler peut subir une déviation, en cours d'assemblage, de sorte que la fusion du métal des deux pièces à assembler ne se produit plus exactement dans deux zones adjacentes aux surfaces de jonction telles que 3 et 4 ou 9 et 10.

La mise en oeuvre du procédé d'assemblage suivant l'invention tel qu'il sera décrit ci-dessous permet d'éviter ou de limiter la déviation du faisceau d'électrons sous l'effet d'un champ magnétique.

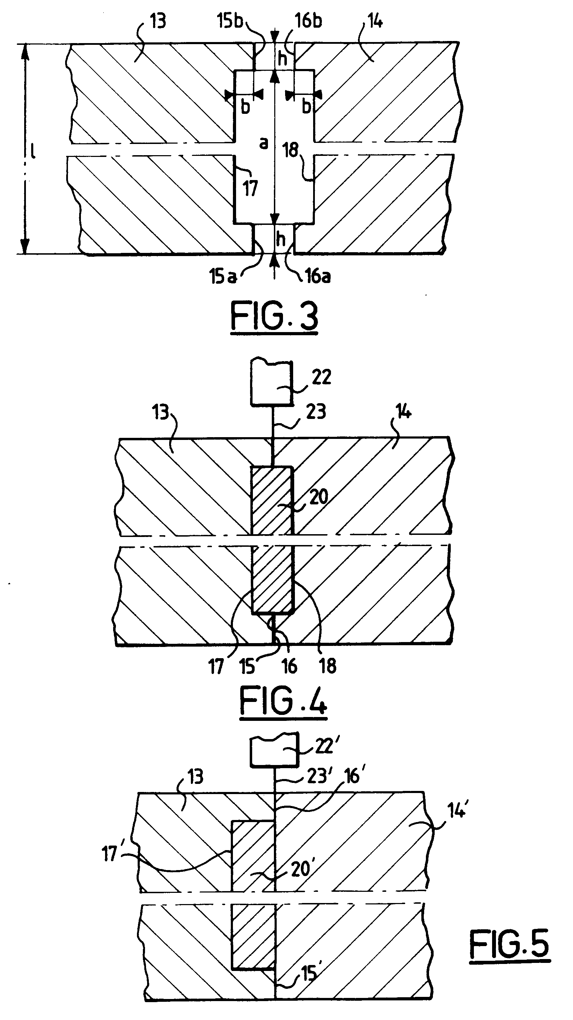

Sur les figures 3 et 4, on a représenté deux pièces épaisses 13 et 14 dont on réalise l'assemblage par soudage par faisceau d'électrons, en utilisant le procédé suivant l'invention.

Les figures 3 et 4 sont des vues en coupe par un plan perpendiculaire aux faces de jonction 15 et 16 des pièces qui sont mises en coïncidence au moment du soudage, comme représenté sur la figure 4.

Dans le cas de deux pièces planes comme représenté sur la figure 1, le plan de coupe est dirigé suivant la longueur des tôles et perpendiculairement à la direction longitudinale des faces de jonction 3 et 4.

Dans le cas de deux pièces tubulaires telles que représentées sur la figure 2, le plan de coupe est un plan axial des pièces tubulaires.

Pour la mise en oeuvre du procédé d'assemblage suivant l'invention, dans une première étape, on réalise par usinage des surfaces de jonction 15 et 16 des pièces 13 et 14, des cavités respectives 17 et 18.

Les cavités 17 et 18 ont une largeur a dans la direction transversale des zones de jonction 15 et 16, c'est-à-dire suivant l'épaisseur des pièces 13 et 14 et une profondeur b dans la direction longitudinale ou axiale des pièces 13 et 14.

La largeur a de la cavité représente une partie substantielle de l'épaisseur e des pièces 13 et 14 ; les parties non usinées 15a, 15b et 16a, 16b, de longueur h des pièces 13 et 14 de part et d'autre des cavités 17, 18 constituant des rebords ménagés uniquement pour assurer une mise en contact et un positionnement précis des pièces 13 et 14 l'une contre l'autre, avant le soudage par faisceau d'électrons.

Les cavités 17 et 18 sont usinées sur toute la longueur des zones de jonction 15 et 16.

Dans le cas de deux pièces planes telles que les pièces 1 et 2 représentées sur la figure 1, la longueur de la cavité correspond à la largeur l des pièces planes 1 et 2. Dans le cas de deux pièces tubulaires telles que représentées sur la figure 2, les cavités telles que 17 et 18 sont de forme annulaire et leur longueur correspond sensiblement à la longueur de la circonférence des pièces tubulaires 7 et 8.

Dans une seconde étape du procédé d'assemblage suivant l'invention, on fixe une bande 20 en matériau métallique amagnétique à l'intérieur de l'une des cavités 17 et 18 ménagées dans l'une des pièces 13 et 14.

La bande de matériau métallique peut être remplacée par un dépôt métallique ou un revêtement composite équivalent réalisé par l'un des procédés suivants : dépôt par projection ou par fusion, dépôt chimique ou électrolytique.

La bande de matériau métallique amagnétique 20 peut être constituée par un produit plat tel que du clinquant qui est fixé en place dans la cavité 17 ou 18, par exemple par pointage ou par soudage par point.

La bande métallique 20 présente une épaisseur sensiblement égale au double de l'épaisseur des cavités 17 et 18. Les pièces 13 et 14 sont rapportées l'une contre l'autre en mettant en contact et en faisant coïncider leurs rebords 15a et 16a d'une part et 15b et 16b d'autre part.

La bande de matériau amagnétique 20 occupe substantiellement tout le volume intérieur du logement constitué par les cavités 17 et 18 mises en coïncidence, comme représenté sur la figure 4.

On réalise alors le soudage des pièces 13 et 14 par faisceau d'électrons, en réalisant la fusion de métal des pièces 13 et 14 de part et d'autre des surfaces de jonction 15 et 16 et du métal amagnétique de la bande 20.

Pour celà, on utilise un canon à électrons 22 qui est disposé de manière que le faisceau d'électrons 23 produit par le canon 22 soit dirigé suivant la surface de jonction des pièces dans la direction transversale des zones de jonction 15 et 16. Dans le cas de deux pièces planes telles que représentées sur la figure 1, cette direction transversale correspond à la direction perpendiculaire aux grandes faces des pièces. Dans le cas de deux pièces tubulaires telles que représentées sur la figure 2, cette direction transversale correspond à la direction radiale des pièces tubulaires.

Dans le cas de deux pièces planes, le canon à électrons ou les pièces sont déplacés suivant un parcours rectiligne, de manière que le faisceau 23 balaye la zone de jonction entre les faces 15 et 16 sur toute sa longueur.

Dans le cas de pièces tubulaires, le canon à électrons 22 est placé dans une position fixe et les pièces tubulaires sont mises en rotation autour de leur axe commun, de manière que le faisceau 23 réalise un balayage circonférentiel des zones de jonction 15 et 16 des pièces 13 et 14 mises en coïncidence.

Dans tous les cas, le faisceau d'électrons 23 traverse les pièces 13 et 14 suivant toute leur épaisseur et échappe à l'action d'un champ magnétique dans l'entrefer entre les pièces 13 et 14, pendant la plus grande partie de son parcours, du fait de la présence de la bande de matériau amagnétique 20.

Lors de la fusion du matériau métallique amagnétique 20, simultanément à la fusion du métal des pièces 13 et 14 au voisinage des surfaces de jonction 15 et 16, il se produit une interdiffusion entre les éléments du matériau amagnétique 20 et les éléments du métal des pièces 13 et 14 et un mélange conduisant à une zone de jonction homogène.

La composition du matériau métallique amagnétique 20 est choisie de manière à assurer une très bonne qualité métallurgique du joint de soudure formé et donc des caractéristiques mécaniques satisfaisantes de l'assemblage réalisé.

Par exemple, dans le cas de deux viroles en acier faiblement allié 18MNDS à 0,18 % de carbone et contenant du manganèse, du nickel, du molybdène et du silicium, ayant une épaisseur de paroi supérieure à 50 mm et par exemple de 27O mm, on a utilisé une bande de matériau amagnétique 20 constituée par un clinquant en alliage de nickel (Alliage 600) renfermant principalement du chrome et du fer, en plus du nickel et présentant de très faibles proportions d'éléments résiduels.

L'épaisseur du clinquant est de 0,4 mm, de sorte que la profondeur b des cavités 17 et 18 constituant par leur juxtaposition le logement du clinquant est de l'ordre de 0,2 mm.

La largeur a du clinquant est de 230 mm, de sorte que la longueur h des zones d'appui des pièces 13 et 14 est de 20 mm.

Dans ces conditions, la qualité du joint métallurgique s'est avérée extrêmement bonne et le faisceau d'électrons ne subit pas de déviation notable, lors de sa traversée des pièces 13 et 14 suivant leur épaisseur.

Sur la figure 5, on a représenté deux pièces 13' et 14', pendant leur assemblage par soudage par faisceau d'électrons par le procédé suivant l'invention et suivant une variante de réalisation.

Une cavité 17' usinée dans la pièce 13', à partir de sa surface de jonction 15' sert de logement à une bande 20' en matériau métallique amagnétique. La seconde pièce 14' est rapportée par l'intermédiaire de sa face de jonction 16' contre la face de jonction 15' de la pièce 13' et contre la face externe de la bande 20' en matériau amagnétique.

Le soudage par faisceau d'électrons 23' est réalisé en utilisant un canon à électrons 22' placé de manière à diriger le faisceau 23' suivant la direction transversale des zones de jonction 15' et 16' placées en coïncidence.

Le faisceau d'électrons 23' n'est soumis à un champ magnétique dans l'entrefer des pièces 13' et 14' que sur une faible partie de son parcours. Le faisceau d'électrons 23' qui ne subit pas de déviation notable réalise la fusion du métal des pièces 13' et 14' au voisinage des faces de jonction 15' et 16' et du matériau amagnétique 20' remplissant la cavité 17'.

Dans le cas de la variante de réalisation de la figure 5, la cavité 17' pourra présenter avantageusement une profondeur de l'ordre de 0,4 mm et une largeur de 230 mm dans le cas de pièces 13', 14' d'une épaisseur de 270 mm. Le matériau amagnétique 20' peut être constitué par un clinquant d'une épaisseur de 0,4 mm ou encore par une couche de revêtement déposée dans la cavité.

Le procédé suivant l'invention permet de réaliser des joints de soudure par faisceau d'électrons qui sont totalement continus et homogènes suivant l'épaisseur des pièces et qui présentent des qualités métallurgiques et mécaniques au moins équivalentes aux joints réalisés par les procédés connus de l'art antérieur.

L'invention ne se limite pas au mode de réalisation qui a été décrit.

C'est ainsi qu'on peut utiliser, dans le cas de l'assemblage de deux pièces en acier, un matériau amagnétique différent d'un alliage de nickel et par exemple un acier austénitique.

L'épaisseur du matériau amagnétique et la profondeur de la ou des cavités prévues dans l'une des pièces à assembler ou dans les deux pièces peuvent être différentes de celles qui ont été données ci-dessous à titre d'exemple.

Sur la figure 6, on a représenté un piquage 25 rapporté et fixé par l'intermédiaire d'un joint de soudure 27 sur un corps tubulaire 26 qui peut être une enveloppe cylindrique à forte épaisseur de paroi. La jonction par soudure entre le piquage 25 et l'enveloppe cylindrique 26 peut être réalisée par faisceau d'électrons, en utilisant le procédé suivant l'invention.

Enfin, l'invention s'applique à l'assemblage de pièces de forte épaisseur différentes de viroles pour cuve de réacteur nucléaire et peut être utilisée très largement, dans le domaine de la chaudronnerie lourde.

## Revendications

1. Procédé d'assemblage de deux pièces (1, 2, 7, 8, 13, 14, 13', 14') par soudage par faisceau d'électrons, les deux pièces étant rapportées l'une contre l'autre suivant deux faces de jonction (3, 4, 9, 10, 15, 16, 15', 16') dans lequel on réalise, préalablement à la mise en contact des faces de jonction (3, 4, 9, 10, 15, 16, 15', 16') des pièces l'une avec l'autre, par usinage, sur l'une au moins des faces de jonction (15, 16, 15', 16') une cavité (17, 18, 17') sur une partie substantielle de la largeur de la face de jonction (15, 16, 15', 16') dans sa direction transversale et sur toute sa longueur, on introduit un matériau métallique (20, 20') dans la cavité (17, 18, 17') et on réalise la fusion du métal des pièces au voisinage des faces de jonction (3, 4, 9, 10, 15, 16, 15', 16') mises en contact et du matériau métallique (20, 20') simultanément à la fusion du métal des pièces (13, 14, 13', 14') par déplacement dans une direction longitudinale des faces de jonction d'un faisceau d'électrons (23, 23') dirigé suivant la direction transversale de la cavité (17, 18, 17'), caractérisé par le fait que le matériau métallique est un matériau amagnétique.

2. Procédé suivant la revendication 1, caractérisé par le fait qu'on usine une cavité (17, 18) dans chacune des pièces (13, 14), qu'on introduit un élément (20) en matériau amagnétique dans l'une des cavités (17, 18) de l'une des pièces (13, 14) et que par mise en contact des pièces (13, 14) suivant leurs faces de jonction (15, 16), on réalise un logement pour le matériau amagnétique (20), par mise en coïncidence des cavités (17, 18).

3. Procédé suivant la revendication 1, caractérisé par le fait qu'on usine une cavité (17') sur la face de jonction (15') de l'une des pièces (13') ou première pièce, qu'on introduit un matériau amagnétique dans la cavité (17') usinée dans la première pièce (13') et qu'on met en contact la seconde pièce (14') avec la première pièce (13') par l'intermédiaire d'une face de jonction (16') ne comportant pas de cavité.

4. Procédé suivant l'une quelconque des revendications 1, 2 et 3, caractérisé par le fait que le matériau amagnétique (20, 20') est introduit dans la cavité (17, 18, 17') sous la forme d'un produit plat de faible épaisseur tel qu'un clinquant.

5. Procédé suivant la revendication 4, caractérisé par le fait que le produit plat a une épaisseur voisine de 0,4 mm.

6. Procédé suivant l'une quelconque des revendications 1, 2 et 3, caractérisé par le fait que le matériau amagnétique est déposé à l'intérieur de la cavité (17, 18, 17') sous la forme d'une couche de revêtement par l'un des procédés suivants : dépôt par projection, dépôt par fusion, dépôt chimique, dépôt électrolytique.

7. Procédé suivant l'une quelconque des revendications 1 à 6, caractérisé par le fait que les pièces (13, 14, 13', 14') sont en un acier faiblement allié et que le matériau amagnétique est constitué par l'un des matériaux suivants : alliage de nickel, acier austénitique.

8. Procédé suivant l'une quelconque des revendications 1 à 7, caractérisé par le fait que les pièces (13, 14, 13', 14') sont des pièces d'une épaisseur au moins égale à 50 mm, et de préférence d'une épaisseur égale ou supérieure à 200 mm.

## Claims

1. Method of joining together two workpieces (1, 2, 7, 8, 13, 14, 13', 14') by electron-beam welding, the two workpieces being brought together, one against the other, by two joining faces (3, 4, 9, 10, 15, 16, 15', 16'), in which method, prior to bringing the joining faces (3, 4, 9, 10, 15, 16, 15', 16') of the workpieces into contact with one another, a cavity (17, 18, 17') is produced, by machining, on at least one of the joining faces (15, 16, 15', 16') over a substantial part of the width of the joining face (15, 16, 15', 16') in its transverse direction and over its entire length, a metallic material (20, 20') is introduced into the cavity (17, 18, 17') and the metal of the workpieces in the vicinity of the joining faces (3, 4, 9, 10, 15, 16, 15', 16') brought into contact and the metallic material (20, 20') are melted simultaneously with the melting of the metal of the workpieces (13, 14, 13', 14') by moving an electron beam (23, 23') in a longitudinal direction of the joining faces, this electron beam being directed along the transverse direction of the cavity (17, 18, 17'), characterized in that the metallic material is a non-magnetic material.

2. Method according to Claim 1, characterized in that a cavity (17, 18) is machined in each of the workpieces (13, 14), in that an element (20) made of non-magnetic material is introduced into one of the cavities (17, 18) of one of the workpieces (13, 14), and in that, by bringing the workpieces (13, 14) into contact along their joining faces (15, 16), a housing is provided for the non-magnetic material (20) by bringing the cavities (17, 18) into coincidence.

3. Method according to Claim 1, characterized in that a cavity (17') is machined on the joining face (15') of one of the workpieces (13') or first workpiece, in that a non-magnetic material is introduced into the cavity (17') machined in the first workpiece (13'), and in that the second workpiece (14') is brought into contact with the first workpiece (13') via a joining face (16') which does not have a cavity.

4. Method according to any one of Claims 1, 2 and 3, characterized in that the non-magnetic material (20, 20') is introduced into the cavity (17, 18, 17') in the form of a thin, flat product such as a shim.

5. Method according to Claim 4, characterized in that the flat product has a thickness of approximately 0.4 mm.

6. Method according to any one of Claims 1, 2 and 3, characterized in that the non-magnetic material is deposited inside the cavity (17, 18, 17') in the form of a coating layer by one of the following processes: spray coating, melt coating, chemical deposition and electroplating.

7. Method according to any one of Claims 1 to 6, characterized in that the workpieces (13, 14, 13', 14') are made of low-alloy steel and in that the non-magnetic material is formed by one of the following materials: nickel alloy and austenitic steel.

8. Method according to any one of Claims 1 to 7, characterized in that the workpieces (13, 14, 13', 14') are workpieces having a thickness at least equal to 50 mm and preferably a thickness equal to or greater than 200 mm.

## Patentansprüche

1. Verfahren zum Zusammenschweißen zweier Werkstücke (1, 2, 7, 8, 13, 14, 13', 14') durch Elektronenstrahlschweissen, wobei die beiden Teile gegeneinander längs zweier Verbindungsflächen (3, 4, 9, 10, 15, 16, 15', 16') angesetzt werden, bei dem man vor dem gegenseitigen Herstellen der Berührung der Verbindungsflächen (3, 4, 9, 10, 15, 16, 15', 16') durch spanende Bearbeitung in mindestens einer der Verbindungsflächen (15, 16, 15', 16') eine Aussparung (17, 18, 17') über einen wesentlichen Teil der Breite der Verbindungsfläche (15, 16, 15', 16') in deren Querrichtung und über ihre gesamte Länge ausbildet, man ein metallisches Material (20, 20') in die Aussparung (17, 18, 17') einbringt und man das Schmelzen des Metalls der Werkstücke in der Nähe der Verbindungsflächen (3, 4, 9, 10, 15, 16, 15', 16'), die miteinander in Berührung gebracht sind, und des metallischen Materials (20, 20') gleichzeitig mit dem Schmelzen des Metalls der Werkstücke (13, 14, 13', 14') vornimmt, durch Bewegen eines Elektronenstrahls (23, 23'), der in der Querrichtung der Aussparung (17, 18, 17') gerichtet ist, in einer Längsrichtung der Verbindungsflächen, dadurch **gekennzeichnet,** daß das metallische Material ein nichtmagnetisches Material ist.

2. Verfahren nach Anspruch 1, dadurch **gekennzeichnet,** daß man eine Aussparung (17, 18) spanend in jedes der Werkstücke (13, 14) einbringt, daß man ein Element (20) aus nicht-magnetischem Material in eine der Aussparungen (17, 18) des einen der Werkstücke (13, 14) einbringt, und daß man dadurch, daß man die Werkstücke (13, 14) längs ihrer Verbindungsflächen (15, 16) in Berührung bringt, einen Sitz für das nicht-magnetische Material (20) durch deckungsgleiches Anordnen der Aussparungen (17, 18) herstellt.

3. Verfahren nach Anspruch 1, dadurch **gekennzeichnet,** daß man eine Aussparung (17') in die Verbindungsfläche (15') eines der Werkstücke (13') oder des ersten Werkstücks spanend einbringt, daß man ein nicht-magnetisches Material in die Aussparung (17') einbringt, die im ersten Werkstück (13') spanend ausgebildet ist, und daß man ein zweites Werkstück (14') mit dem ersten Werkstück (13') mit Hilfe einer Verbindungsfläche (16') in Berührung bringt, die keine Aussparung aufweist.

4. Verfahren nach irgendeinem der Ansprüche 1, 2 und 3, dadurch **gekennzeichnet,** daß das nicht-magnetische Material (20, 20') in die Aussparung (17, 18, 17') in Form eines flachen Erzeugnisses mit geringer Dicke, wie etwa einer Metallfolie, eingebracht wird.

5. Verfahren nach Anspruch 4, dadurch **gekennzeichnet,** daß das flache Erzeugnis eine Dicke in Nähe von 0,4 mm aufweist.

6. Verfahren nach irgendeinem der Ansprüche 1, 2 und 3, dadurch **gekennzeichnet,** daß das nicht-magnetische Material im Inneren der Aussparung (17, 18, 17') in Form einer Verkleidungsschicht durch eines der folgenden Verfahren abgelagert wird: Niederschlag durch Aufspritzen, Niederschlag durch einen Schmelzvorgang, chemischer Niederschlag, galvanischer Niederschlag.

7. Verfahren nach irgendeinem der Ansprüche 1 bis 6, dadurch **gekennzeichnet,** daß die Werkstücke (13, 14, 13', 14') aus niedriglegiertem Stahl bestehen, und daß das nicht-magnetische Material von einem der folgenden Materialien gebildet ist: Nickellegierung, austenitischer Stahl.

8. Verfahren nach irgendeinem der Ansprüche 1 bis 7, dadurch **gekennzeichnet,** daß die Werkstücke (13, 14, 13', 14') Werkstücke mit einer Dicke von mindestens gleich 50 mm sind und bevorzugt einer Dicke gleich oder größer als 200 mm.
